Europäisches Patentamt

European Patent Office

Office européen des brevets

(19)

(11) **EP 1 505 527 A1**

(12) **EUROPEAN PATENT APPLICATION**
published in accordance with Art. 158(3) EPC

(43) Date of publication:
**09.02.2005 Bulletin 2005/06**

(51) Int Cl.⁷: **G06F 17/60**

(21) Application number: **03723336.8**

(86) International application number:
**PCT/JP2003/005894**

(22) Date of filing: **12.05.2003**

(87) International publication number:
**WO 2003/098509 (27.11.2003 Gazette 2003/48)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **15.05.2002 JP 2002140494**

(71) Applicant: **Dentsu Inc.**
**Tokyo 105-7001 (JP)**

(72) Inventor: **IIJIMA, Akio, c/o DENTSU INC.**
**Tokyo 105-7001 (JP)**

(74) Representative: **Skone James, Robert Edmund**
**GILL JENNINGS & EVERY,**
**Broadgate House,**
**7 Eldon Street**
**London EC2M 7LH (GB)**

(54) **AD MARKET SYSTEM AND METHOD**

(57)    Disclosed is an advertising-marketing system, which comprises setup means for setting up a permissible scope for using viewer-attribute information of a viewer and a permissible scope for tracking viewings of the viewer, permission-information display means connected to the setup means and adapted to display information about the permissible scopes entered from the setup means, to the viewer, viewer-attribute-information input means for entering the viewer-attribute information therefrom, viewer-attribute-information storage means connected to the viewer-attribute- information input means and adapted to store the viewer-attribute-information entered from the viewer-attribute-information input means, tracking means connected to the setup means and adapted to track viewing-record information of the viewer within the permissible scopes set up using the setup means, viewing-record-information storage means connected to the tracking means and adapted to store the tracked viewing-record information, and aggregating means connected to the viewer-attribute-information storage means and the viewing-record-information storage means and adapted to aggregate the viewer-attribute-information stored in the viewer-attribute-information storage means and the viewing-record information stored in the viewing-record-information storage means together.

FIG.1

**Description**

TECHNICAL FIELD

The present invention relates to an advertising-marketing system and method for delivering and managing advertisements through the use of a communication system, such as broadband systems, or a communication network, such as the Internet.

BACKGROUND ART

Generally, viewer's profile information, preference information and viewing-record information (information indicative of viewer's viewing action) (these information are hereinafter collectively referred to as "personal information") serve as significantly valuable and critical information in organizing contents and making plans for advertising and marketing.

The personal information pertains to viewer's right to privacy. Thus, any third party (for example, advertiser) can use personal information of a viewer only after a pre-consent or pre-permission of the viewer and only in a scope permitted by the viewer.

It is critically important for third party to figure out specific conditions required for the third party to obtain viewer's permission of using his/her personal information, such as merits to be given to a viewer in return for viewer's permission of using his/her personal information, or restrictions on the permission.

The content (e.g. type and/or quantity) of the conditions required for obtaining viewer's permission is varied depending on individual viewers. Thus, there has been a problem of difficulties in providing merits to all viewers who have given the permission of using his/her personal information.

DISCLOSURE OF THE INVENTION

In view of the above problem in conventional technologies, it is therefore an object of the present invention to provide an advertising-marketing system and method capable of allowing all viewers who have given the permission of using his/her personal information to enjoy merits depending on individual viewer's conditions for the permission of using their private information.

In order to achieve the above object, according to the present invention, there is provided an advertising-marketing system comprising setup means for setting up a permissible scope for using viewer-attribute information of a viewer and a permissible scope for tracking viewings of the viewer, permission-information display means connected to the setup means and adapted to display information about the permissible scopes entered from the setup means, to the viewer, viewer-attribute-information input means for entering the viewer-attribute information therefrom, viewer-attribute-information storage means connected to the viewer-attribute- information input means and adapted to store the viewer-attribute-information entered from the viewer-attribute-information input means, tracking means connected to the setup means and adapted to track viewing-record information of the viewer within the permissible scopes-set up using the setup means, viewing-record-information storage means connected to the tracking means and adapted to store the tracked viewing-record information, and aggregating means connected to the viewer-attribute-information storage means and the viewing-record-information storage means and adapted to aggregate the viewer-attribute-information stored in the viewer-attribute-information storage means and the viewing-record information stored in the viewing-record-information storage means together.

In order to achieve the above object, the present invention also provides an advertising-marketing method comprising the steps of setting up a permissible scope for using viewer-attribute information of a viewer and a permissible scope for tracking viewings of the viewer, displaying information about the permissible scopes to the viewer, entering the viewer-attribute information, storing the entered viewer-attribute-information, tracking viewing-record information of the viewer within the set-up permissible scopes, storing the tracked viewing-record information, and aggregating the stored viewer-attribute-information and the stored viewing-record information together.

The advertising-marketing system of the present invention may further include aggregated-information pickup means connected to the setup means and the aggregating means and adapted to pick up the information aggregated by the aggregating means, on an individual permission basis in conformity to the information about the permissible scopes set up using the setup means.

The advertising-marketing system of the present invention may further include aggregated-information display means connected to the aggregated-information pickup means and adapted to display the aggregated information picked up by the aggregated-information pickup means, on an individual viewer basis.

The advertising-marketing system of the present invention may further include incentive setup means for allowing the viewer to selectively set up the category of advertising products, and to set up an acceptable level and/or type of incentive with respect to each of advertising forms for the advertising products falling within the set-up category.

The advertising-marketing system of the present invention may further include advertising form setup means for allowing an applicant for transmitting an advertisement to set up a target-viewer category to be derived from at least one of profile data, preference data and viewing/action record data of the viewer or a combination thereof.

The advertising-marketing system of the present invention may further include calculation means for aggregating information about the incentive on an individual viewer-category basis in accordance with respective outputs from the aggregating means, the incentive setup means and the advertising form setup means, to calculate the number of viewers in the set-up target-viewer category.

The advertising-marketing system of the present invention may further include interaction means adapted to display on a screen the number of viewers calculated by the calculation means.

The advertising-marketing system of the present invention may further include ordering/order-receiving means adapted to allow the applicant to select one of the advertising forms desirous of being received by the viewers in the set-up target-viewer category.

In the advertising-marketing system of the present invention, the interaction means may include display means adapted to display in a graphical representation a level and/or type of incentive required for allowing the receiving of the selected advertising form to be accepted by the viewers in the set-up target-viewer category.

In the advertising-marketing system of the present invention, the display means may be adapted to display a graph allowing the applicant to know information including the number of viewers to be expected to receive the advertisement and a total estimated cost, immediately after the applicant selectively sets up the incentive up to its upper limit value using the interaction means.

The advertising-marketing system of the present invention may further include advertisement transmission means for transmitting the advertisement on an individual viewer basis in the advertising form selected using the ordering/order-receiving means.

In the advertising-marketing system of the present invention, the advertisement transmission means may include display means for displaying the transmitted advertisement on an individual viewer basis.

The advertising-marketing system of the present invention may further include incentive transmission means for transmitting the incentive of the viewer obtained by receiving the advertisement, on an individual viewer basis.

In the advertising-marketing system of the present invention, the incentive transmission means may include display means for displaying the transmitted incentive on an individual viewer basis.

The advertising-marketing method of the present invention may further include the step of picking up the aggregated information on an individual permission basis in conformity to the information about the set-up permissible scopes.

The advertising-marketing method of the present invention may further include the step of displaying the picked-up aggregated information on an individual viewer basis.

The advertising-marketing method of the present invention may further include the step of allowing the viewer to selectively set up the category of advertising products, and to set up an acceptable level and/or type of incentive with respect to each of advertising forms for the advertising products falling within the set-up category.

The advertising-marketing method of the present invention may further include the step of allowing an applicant of transmitting an advertisement to set up a target-viewer category to be derived from at least one of profile data, preference data and viewing/action record data of the viewer or a combination thereof.

The advertising-marketing method of the present invention may further include the step of aggregating information about the incentive on an individual viewer-category basis in accordance with respective outputs from the aggregating step, the incentive setting step and the target-viewer-category setting step, to calculate the number of viewers in the set-up target-viewer category.

The advertising-marketing method of the present invention may further include the step of displaying the calculated number of viewers in the set-up target-viewer category.

The advertising-marketing method of the present invention may further include the step of allowing the applicant to select one of the advertising forms desirous of being received by the viewers in the set-up target-viewer category.

In the advertising-marketing method of the present invention, the advertising-form selecting step may further include the step of displaying in a graphical representation a level and/or type of incentive required for allowing the receiving of the selected advertising form to be accepted by the viewers in the set-up target-viewer category.

In the advertising-marketing method of the present invention, the displaying step may include displaying a graph allowing the applicant to know information including the number of viewers to be expected to receive the advertisement and a total estimated cost, immediately after the applicant selectively sets up the incentive up to its upper limit value.

The advertising-marketing method of the present invention may further include the step of transmitting the advertisement in the selected advertising form on an individual viewer basis.

In the advertising-marketing method of the present invention, the advertisement transmitting step may further include the step of displaying the transmitted advertisement on an individual viewer basis.

The advertising-marketing method of the present invention may further include the step of transmitting the incentive of the viewer obtained by receiving the advertisement, on an individual viewer basis.

In the advertising-marketing method of the present invention, the incentive transmitting step may further include the step of displaying the transmitted incentive on an individual viewer basis.

BRIEF DESCRIPTION OF THE DRAWINGS

FIG 1 is a schematic block diagram showing one example of a donation-type content portal system as an advertising-marketing system according to one preferred embodiment of the present invention.

FIG 2 is an explanatory flowchart of the operation of the donation-type content portal system in FIG 1.

FIG 3 is an explanatory flowchart of the operation of the donation-type content portal system in FIG 1.

FIG 4 is a schematic block diagram showing one example of a viewer's offer integration-type advertising system as an advertising-marketing system according to another preferred embodiment of the present invention.

FIG 5 is an explanatory flowchart of the operation of the viewer's offer integration-type advertising system in FIG 4.

FIG 6 is an explanatory flowchart of the operation of the viewer's offer integration-type advertising system in FIG 4.

FIG 7 is an explanatory flowchart of the operation of the viewer's offer integration-type advertising system in FIG 4.

FIG 8 is a diagram showing one example of a target-viewer-category selection screen in the viewer's offer integration-type advertising system in FIG 4.

FIG 9 is an incentive-related graph for use in selecting an advertising form in the viewer's offer integration-type advertising system in FIG 4.

DESCRIPTION OF THE PREFERRED EMBODIMENTS

With reference to the accompanying drawings, preferred embodiments of an advertising-marketing system and method of the present invention will now be described.

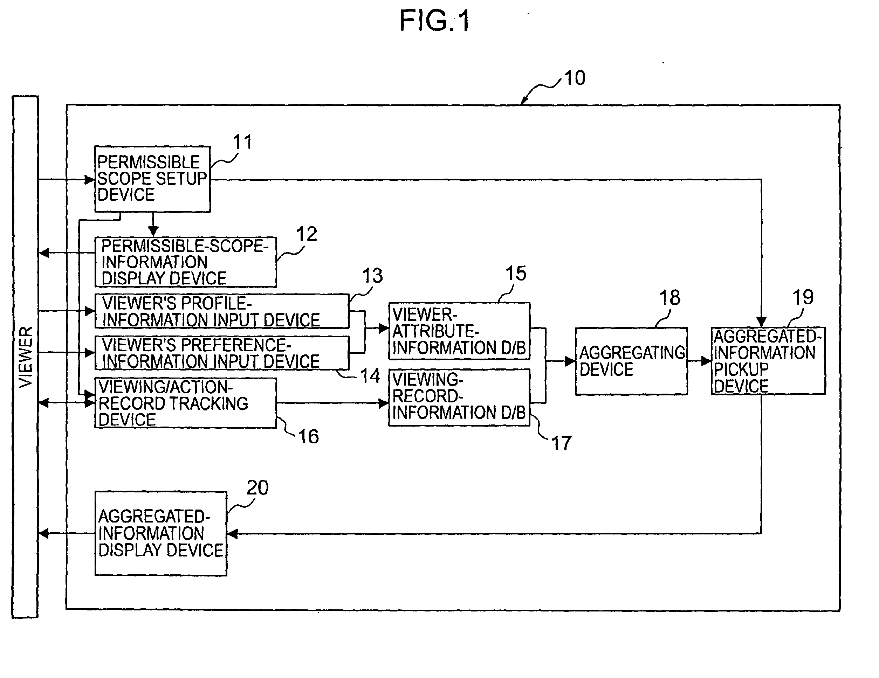

FIG 1 is a schematic block diagram showing one example of a donation-type content portal system as an advertising-marketing system according to one preferred embodiment of the present invention.

The donation-type content portal system 10 illustrated in FIG 1 comprises a permissible scope setup device 11 for allowing a viewer to set up a permissible scope for using profile information and preference information of the viewer (hereinafter referred to as "viewer-attribute information") and a permissible scope for tracking viewings of the viewer, a permissible-scope-information display device 12 connected to the setup device 11 and adapted to display information about the permissible scopes entered from the setup device 11, to the viewer, a viewer's profile-information input device 13 for allowing the viewer to enter the profile information of the viewer therefrom, a viewer's preference-information input device 14 for allowing the viewer to enter the preference information of the viewer therefrom, a viewer-attribute-information database 15 connected to the input devices 13 and 14 and adapted to store the viewer-attribute-information, a viewing/action-record tracking device 16 connected to the setup device 11 and adapted to track the viewing/action-record of the viewer within the permissible scopes set up using the setup device 11, a viewing-record-information database 17 connected to the tracking device 16 and adapted to store information about the viewing/action record (hereinafter referred to as "viewing-record information") of the viewer, an aggregating device 18 connected to the databases 15 and 17 and adapted to aggregate the viewer-attribute-information and the viewing-record information together, an aggregated-information pickup device 19 connected to the setup device 11 and the aggregating device 18 and adapted to pick up the information aggregated by the aggregating device 18 (hereinafter referred to as "aggregated information"), on an individual permission basis, and an aggregated-information display device 20 connected to the aggregated-information pickup device 19 and adapted to display the aggregated information picked up by the aggregated-information pickup device 19, on an individual viewer basis.

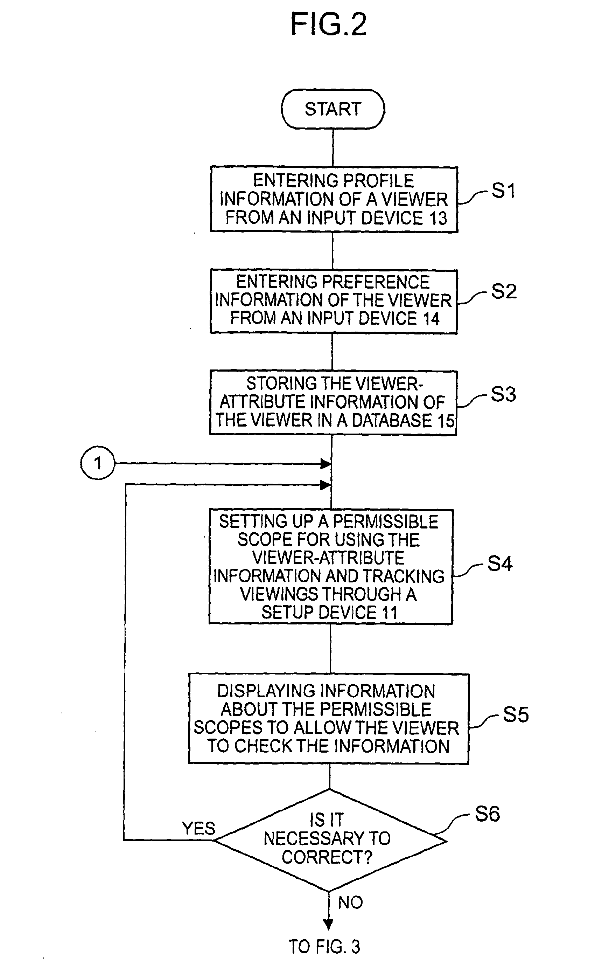

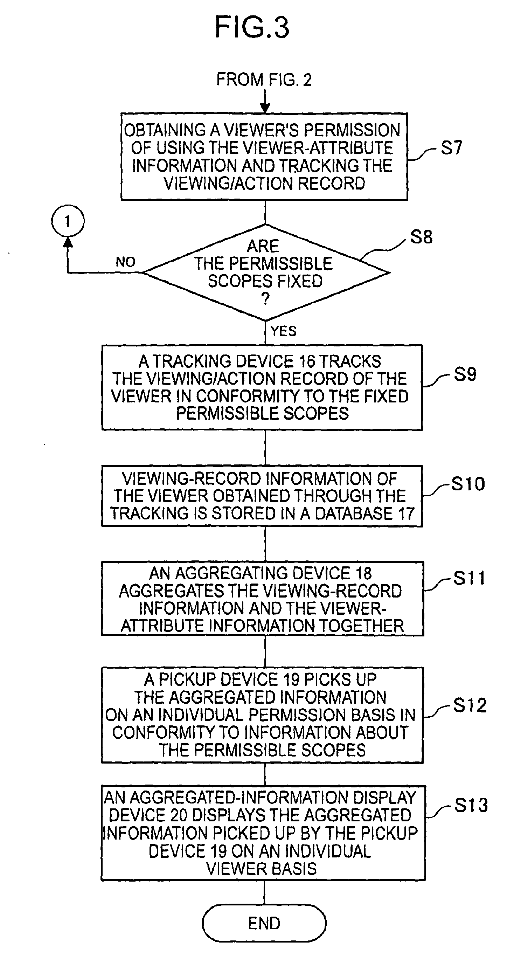

With reference to the flowcharts in FIGS. 2 and 3, the operation of the donation-type content portal system illustrated in FIG 1 will be described.

A viewer first enters his/her profile information from the input device 13 (Step S1), and then enters his/her preference (hobbies, likes etc.) information from the input device 14 (Step S2). The profile information and preference information (viewer-attribute information) entered from the input devices 13 and 14 are stored in the database 15 (Step S3).

The viewer also sets up a permissible scope for using the viewer-attribute information of the viewer stored in the database 15, and a permissible scope for tracking viewings of the viewer, using the setup device 11 (Step S4).

Then, information about the permissible scopes set up using the setup device 11 are displayed on the display device 12 to allow the viewer to check the information about the permissible scopes (Step S5). If it is necessary to correct or change the permissive scopes, the process will return to Step S4 so as to allow the viewer to re-enter corrected information (Step S6). Through the above process, a viewer's consent or permission of using his/her viewer-attribute information and of anonymously tracking the viewing/action record about what the viewer has viewed via networks is obtained (Step S7).

After the information about the permissible scopes set up using the setup device 11 are fixed (Step S8), the tracking device 16 tracks the viewing/action record of the viewer in conformity to the fixed permissible scopes (Step S9), and information about the viewing/action record (viewing-record information) of the viewer obtained through the tracking using the tracking device 16 is stored in the database 17 (Step S10).

Then, the aggregating device 18 aggregates the viewing-record information of the viewer stored in the database 17 and the viewer-attribute information of the viewer stored in the database 15 together (Step S11).

The pickup device 19 then pickups the aggregated information created at Step S11 on an individual permission basis in conformity to information about the permissible scopes set up using the setup device 11 (Step S12), and the aggregated-information display device 20 displays the aggregated information picked up by the pickup device 19 on an individual viewer (permissible scope) basis (Step S13).

As described above, the system illustrated in FIG 1 is configured such that only a viewer who has provided personal information (personal profile, preference and action-record of the viewer) can use a portal screen with a popularity ranking of contents, recommendation, search engine or the like based on aggregated data in proportion to the level of the provided information, without charge. That is, on the condition that each of users provides his/her personal data as a conditional donation, he/she can enjoy a value obtained by summing the data, in the form of an incentive.

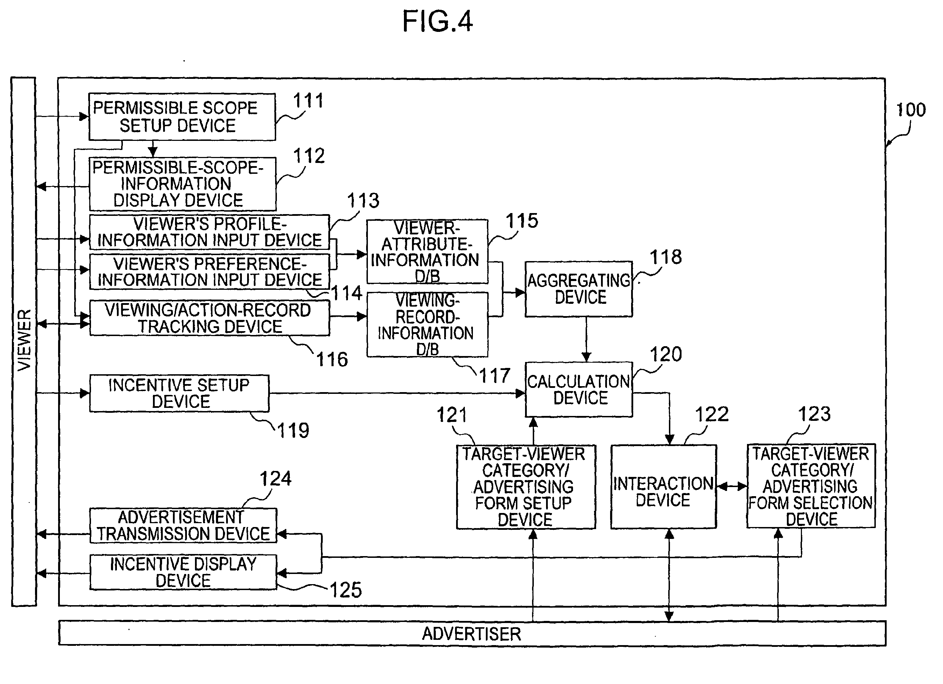

FIG 4 is a schematic block diagram showing one example of a viewer's offer integration-type advertising system as an advertising-marketing system according to another preferred embodiment of the present invention.

The viewer's offer integration-type advertising system 100 illustrated in FIG 4 comprises a permissible scope setup device 111 for allowing a viewer to set up a permissible scope for using viewer-attribute information and a permissible scope for tracking viewings of the viewer, a permissible-scope-information display device 112 connected to the setup device 111 and adapted to display information about the permissible scopes entered from the permissible scope setup device 111, to the viewer, a viewer's profile-information input device 113 for allowing the viewer to enter the profile information of the viewer therefrom, a viewer's preference-information input device 114 for allowing the viewer to enter the preference information of the viewer therefrom, a viewer-attribute-information database 115 connected to the input devices 113 and 114 and adapted to store the viewer-attribute-information, a viewing/action-record tracking device 116 connected to the setup device 111 and adapted to track the viewing/action-record of the viewer on an individual viewer basis within the permissible scopes set up using the setup device 111, a viewing-record-information database 117 connected to the tracking device 116 and adapted to store information about the viewing-record information of the viewer, an aggregating device 118 connected to the databases 115 and 117 and adapted to aggregate the viewer-attribute-information and the viewing-record information together, an incentive setup device 119 for setting up the category of products to be advertised (or advertising products) and setting up the level of an incentive with respect to each of advertising forms, a calculation device 120 for aggregating information about the incentive on an individual viewer-category basis to calculate the number of viewers in a target-viewer category, a target-viewer category/advertising form setup device 121 for allowing an applicant of transmitting an advertisement to selectively set up any one of the target-viewer categories and advertising forms, an interaction device 122 for displaying on a screen a graph representing the level of incentive required for allowing the receiving of the advertising form to be accepted by the viewers in each of the target-viewer categories, a target-viewer category/advertising form selection device 123 for selecting a target-viewer category and an advertising form subject to an actual advertising, from the target-viewer categories and the advertising forms, an advertisement transmission device 124 for transmitting the advertisement on an individual viewer basis in the advertising form selected using the target-viewer category/advertising form selection device 123, and an incentive display device 125 for displaying on a screen the incentive of the viewer obtained by receiving the advertisement.

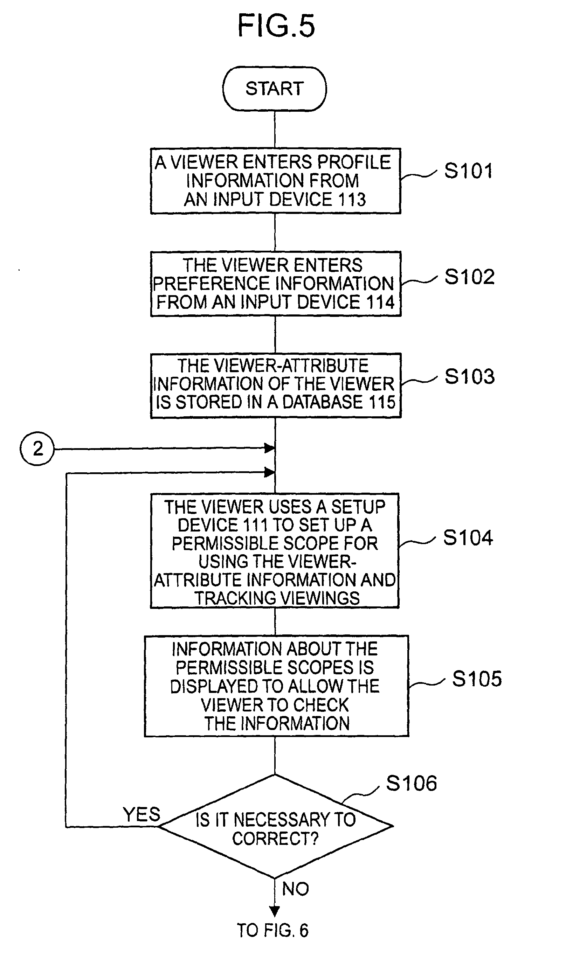

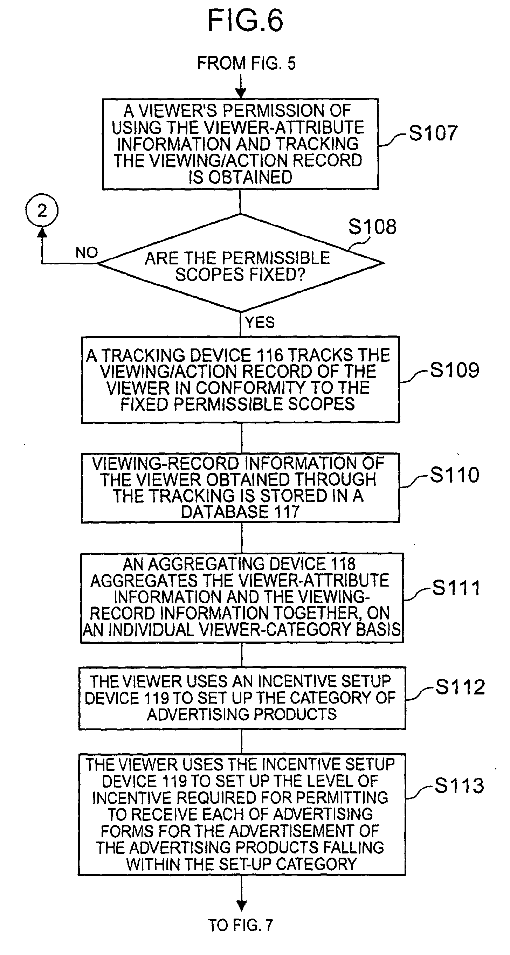

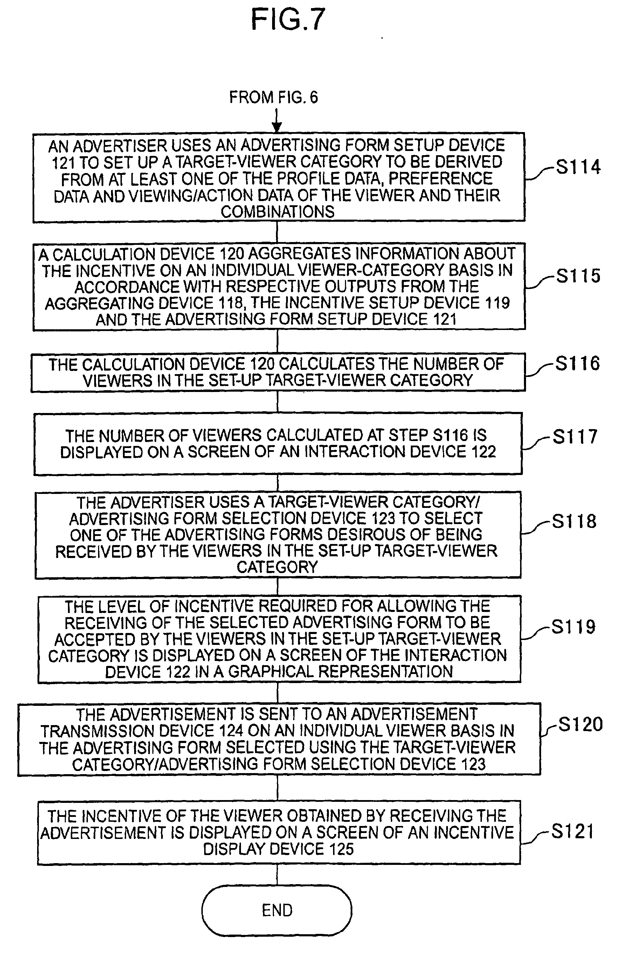

With reference to the flowcharts in FIGS. 5 to 7, the operation of the donation-type content portal system illustrated in FIG. 1 will be described.

A viewer first enters his/her profile information from the input device 113 (Step S101), and then enters his/her preference information from the input device 114 (Step S102). The viewer-attribute information entered from the input devices 113 and 114 are stored in the database 115 (Step S103).

The viewer also sets up a permissible scope for using the viewer-attribute information stored in the database 115, and a permissible scope for tracking viewings of the viewer, using the setup device 111 (Step S 104).

Then, information about the permissible scopes set up using the setup device 111 are displayed on the display device 112 to allow the viewer to check the information about the permissible scopes (Step S 105). If it is necessary to correct or change the permissive-scope information displayed on the display 112, the process will return to Step S 104 so as to allow the viewer to re-enter corrected information (Step S106). Through the above process, a viewer's consent or permission of using his/her viewer-attribute information and of anonymously tracking the viewing/action record about what the viewer has viewed via networks is obtained (Step S107). The viewer may refuse the tracking. In this case, the private information of the viewer will be only the profile information and the preference information (or viewer-attribute information).

After the information about the permissible scopes set up using the setup device 111 are fixed (Step S108), the tracking device 116 tracks the viewing/action record of the viewer in conformity to the fixed permissible scopes (Step S 109), and information about the viewing/action record of the viewer obtained through the tracking using the tracking device 116 is stored in the database 117 (Step S110).

Then, the aggregating device 118 aggregates the viewer-attribute information stored in the database 115 and the viewing-record information stored in the database 117 together, on an individual viewer-category basis in accordance with viewer-identification codes (Step S111).

The viewer sets up one or more categories of advertising products using the incentive setup device 119 (Step 112). The category of advertising products can be arbitrarily set up according to viewer's wishes. That is, the category may be set limitedly or specifically or may be set broadly or roughly.

The viewer also uses the incentive setup device 119 to set up a lower limit value of incentive required for permitting to receive each of advertising forms [(1) Viewing a commercial message, (2) Receiving product information, (3) Answering a questionnaire after viewing product information, (4) Receiving a coupon as benefits from the above actions] for the advertisement of the advertising products falling within the set-up category (Step S 113).

The incentive may be a discount on pay content or pay service, a prize to be obtained in exchange for accumulated points, or refunding. If the viewer has an interest in a specific category of advertising products, he/she may set the incentive at ¥zero to receive related advertisements as much as possible. In each of the advertising forms, quantity and/or procedure may be set in more detail. For example, conditions, such as the time-period of a commercial message (quantity), the receipt of product information by such as a mail, etc., or the access to advertiser's Web page by clicking on a banner (procedure), can be variously set.

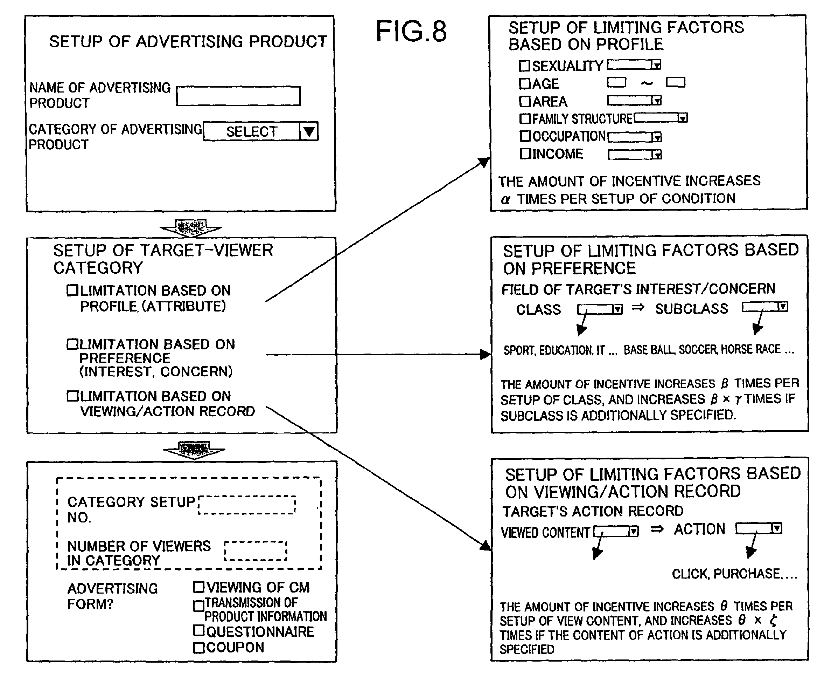

An applicant for transmitting an advertisement (e.g. an advertiser or an advertising company consigned by an advertiser) uses the target-viewer category/advertising form setup device 121 to set up the category of targeted viewers [target-viewer category (see FIG 8)] to be derived from at least one of the profile data, preference data and viewing/action data of the viewer and their combinations (Step S114).

Then, the calculation device 120 aggregates information about the incentive on an individual viewer-category basis in accordance with respective outputs from the aggregating device 118, the incentive setup device 119 and the target-viewer category/advertising form setup device 121 (Step S115) to calculate the number of viewers in the set-up target-viewer category (Step S 116), and display the number of viewers calculated at Step S116 on a screen of the interaction device 122 which is viewed by the applicant (Step S117).

The advertiser uses the target-viewer category/advertising form selection device 123 to select one of the advertising forms desirous of being received by the viewers in the set-up target-viewer category (Step S 118).

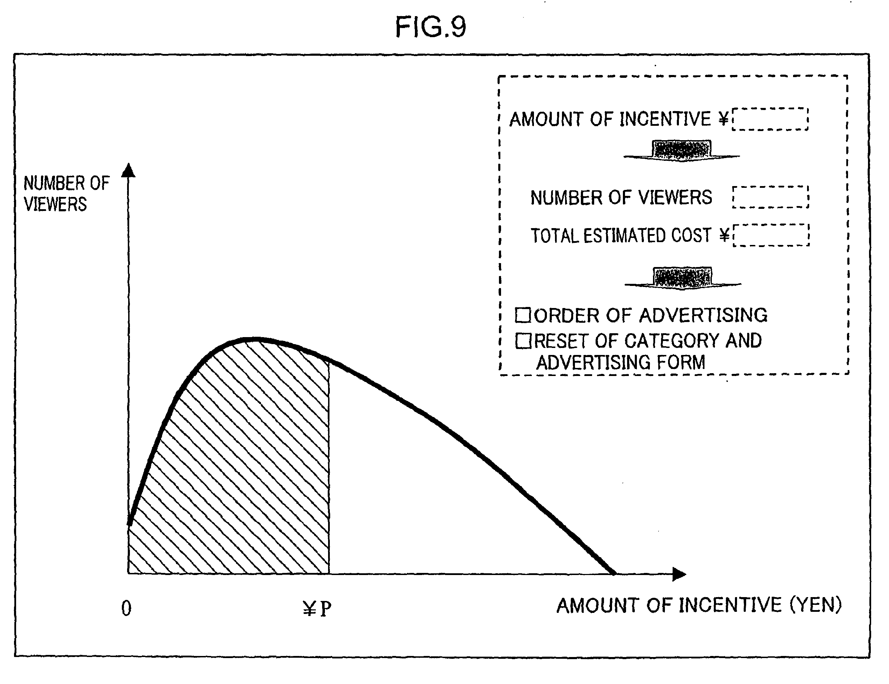

In response to the selection, the level of incentive required for allowing the receiving of the selected advertising form to be accepted by the viewers in the set-up target-viewer category is displayed on a screen of the interaction device 122 in a graphical representation as shown in FIG. 9 (Step S119). Thus, based on the graph of FIG 9 displayed on the screen of the interaction device 122, the advertiser can quickly know various informations, such as the number of viewers to be expected to receive the advertisement and a total estimated cost.

Then, the advertisement is sent to the advertisement transmission device 124 on an individual viewer basis in the advertising form selected using the target-viewer category/advertising form selection device 123 (Step S120), and the incentive of the viewer obtained by receiving the advertisement is displayed on a screen of the incentive display device 125 (Step S121).

The advertisement may be transmitted in such a manner that it is inserted during viewing of a content or the viewer is instructed to view the advertisement by itself. Further, the advertisement may be displayed directly on a screen which is being viewed by the viewer or may be sent to the viewer by such as a mail, etc.

An additional rate of incentive is determined as follows.

If the setting of a certain target is likely to impose a relatively heavy load on viewers or cause a relatively high risk on the system, an additional rate of incentive will be set at a relatively high value. In a reverse case, the additional rate of incentive is set at a relatively low value, but never becomes 1 or less. More specifically, as compared with sexuality or age, the reliability of a target set up on an individual annual-income basis cannot be maintained without imposing fairly heavy load on viewers for data input. In such a case, the additional rate of incentive is set at fairly high value.

The amount of viewer's private information to be used for setting up a target-viewer category is generally increased as the number of limiting factors is increased. Thus, the incentive is increased at an additional rate in proportion to the number of limiting factors. The additional rate may also be varied depending on each of the limiting factors.

The following is one example of a formula for calculating a total estimated cost in case where the incentive is set at ¥P.

$$A(P) = \int_{X=0}^{X=P} X \cdot N(X) \cdot W \cdot \alpha \quad dx \qquad (1)$$

, wherein: N(X) is the number of target viewers who set the incentive at ¥X;

W is the number of limiting factors for setting a target; and

$\alpha$ is an additional rate of incentive per limiting factor for setting the target ($\alpha > 1$ ).

An applicant for advertising can be set up the number of viewers to be expected to receive the advertisement while varying the value of incentive in consideration of a total estimated cost. When the applicant judges that a sufficient number of viewers cannot be obtained if the amount of incentive is set up in conformity with a predetermined total budget, the category may be reset to relax the limiting factors. Reversely, when the applicant judges that the number of viewers is excessively increased higher than expected if the amount of incentive is set up in conformity with the predetermined total budget, the limiting factors may be more limitedly set up to reduce the number of viewers in the target viewer category.

The applicant for transmitting an advertisement, or an advertiser, can figure out the number of viewers to be expected to receive the advertisement and a total estimated cost for an intended advertising form by adjusting the target-viewer category and the amount of incentive.

If the advertiser judges that the above setting is acceptable in terms of marketing, he/she can give out an order for transmission of the advertisement in conformity to the setting.

The viewer can change the setting of the incentive depending on the number of receipts of the advertisement in the advertising form.

Specifically, if the viewer intends to reduce the number of receipts of the advertisement, the amount of incentive may be changed to a higher value. Otherwise, if the viewer intends to receive an increased number of receipts of the advertisement, the amount of incentive may be changed to a lower value.

A rule stipulated that an corrected amount of incentive becomes effective at one day's interval may be laid down to prevent troubles due to the change in number of viewers during order from the applicant.

Further, the system may be configured to allow a system administrator to collect a certain service charge for the incentive transaction under the pretext of a commission fee.

As mentioned above, according to the present invention, even if the condition of permitting to use personal information is varied depending on individual viewers, all of the viewers who has permitted to use their personal information can enjoy merits in proportion to each of their conditions of the permission.

In addition, an applicant for transmitting an advertisement, such as advertiser, can adjust the amount of incentive and/or the target-viewer category while referring to a total estimated cost to selectively determine the number of viewers to be expected to receive the advertisement.

**Claims**

**1.** An advertising-marketing system comprising:

setup means for setting up a permissible scope for using viewer-attribute information of a viewer, and a permissible scope for tracking viewings of said viewer;

permission-information display means connected to said setup means and adapted to display information about said permissible scopes entered from said setup means, to said viewer; viewer-attribute-information input means for entering said viewer-attribute information therefrom;

viewer-attribute-information storage means connected to said viewer-attribute- information input means and adapted to store said viewer-attribute-information entered from said viewer-attribute-information input means;

tracking means connected to said set up means and adapted to track viewing-record information of said viewer within said permissible scopes set up using said setup means;

viewing-record-information storage means connected to said tracking means and adapted to store the tracked viewing-record information; and

aggregating means connected to said viewer-attribute-information storage means and said viewing-record-information storage means and adapted to aggregate said viewer-attribute- information stored in said viewer-attribute-information storage means and said viewing-record information stored in said viewing-record-information storage means together.

2. The advertising-marketing system as defined in claim 1, which further includes aggregated-information pickup means connected to said setup means and said aggregating means and adapted to pick up the information aggregated by said aggregating means, on an individual permission basis in conformity to the information about said permissible scopes set up using said setup means.

3. The advertising-marketing system as defined in claim 2, which further includes aggregated-information display means connected to said aggregated-information pickup means and adapted to display the aggregated information picked up by said aggregated-information pickup means, on an individual viewer basis.

4. The advertising-marketing system as defined in claim 1, which further includes incentive setup means for allowing said viewer to selectively set up the category of advertising products, and to set up an acceptable level and/or type of incentive with respect to each of advertising forms for the advertising products falling within said set-up category.

5. An advertising-marketing system as defined in claim 4, further comprising advertising form setup means for allowing an applicant of transmitting an advertisement to set up a target-viewer category to be derived from at least one of profile data, preference data, viewing/action record data of said viewer or a combination thereof.

6. The advertising-marketing system as defined in claim 5, which further includes calculation means for aggregating information about said incentive on an individual viewer-category basis in accordance with respective outputs from said aggregating means, said incentive setup means and said advertising form setup means, to calculate the number of viewers in said set-up target-viewer category.

7. The advertising-marketing system as defined in claim 6, which further includes interaction means adapted to display on a screen said number of viewers calculated by said calculation means.

8. The advertising-marketing system as defined in claim 7, which further includes ordering/order-receiving means adapted to allow said applicant to select one of said advertising forms desirous of being received by said viewers in said set-up target-viewer category.

9. The advertising-marketing system as defined in claim 8, wherein said interaction means includes display means adapted to display in a graphical representation a level and/or type of incentive required for allowing the receiving of said selected advertising form to be accepted by said viewers in said set-up target-viewer category.

10. The advertising-marketing system as defined in claim 9, wherein said display means is adapted to display a graph allowing said applicant to know information including the number of viewers to be expected to receive said advertisement and a total estimated cost, immediately after said applicant selectively sets up said incentive up to its upper limit value using said interaction means.

11. The advertising-marketing system as defined in claim 10, which further includes advertisement transmission means for transmitting said advertisement on an individual viewer basis in said advertising form selected using said ordering/order-receiving means.

12. The advertising-marketing system as defined in claim 11, wherein said advertisement transmission means includes display means for displaying said transmitted advertisement on an individual viewer basis.

13. The advertising-marketing system as defined in claim 11, which further includes incentive transmission means for transmitting the incentive of said viewer obtained by receiving said advertisement, on an individual viewer basis.

14. The advertising-marketing system as defined in claim 13, wherein said incentive transmission means includes display means for displaying said transmitted incentive on an individual viewer basis.

15. An advertising-marketing method comprising the steps of:

setting up a permissible scope for using viewer-attribute information of a viewer, and a permissible scope for tracking viewings of said viewer;
displaying information about said permissible scopes to said viewer;
entering said viewer-attribute information;
storing said entered viewer-attribute-information;
tracking viewing-record information of said viewer within said set-up permissible scopes;
storing the tracked viewing-record information; and
combinationally aggregating said stored viewer-attribute-information and said stored viewing-record information.

16. The advertising-marketing method as defined in claim 15, which further includes the step of picking up said aggregated information on an individual permission basis in conformity to the information about said set-up permissible scopes.

17. The advertising-marketing method as defined in claim 16, which further includes the step of displaying said picked-up aggregated information on an individual viewer basis.

18. The advertising-marketing method as defined in claim 15, which further includes the step of allowing said viewer to selectively set up the category of advertising products, and to set up an acceptable level and/or type of incentive with respect to each of advertising forms for the advertising products falling within said set-up category.

19. The advertising-marketing method as defined in claim 18, which further includes the step of allowing an applicant of transmitting an advertisement to set up a target-viewer category to be derived from at least one of profile data, preference data and viewing/action record data of said viewer or a combination thereof.

20. The advertising-marketing method as defined in claim 19, which further includes the step of aggregating information about said incentive on an individual viewer-category basis in accordance with respective outputs from said aggregating step, said incentive setting step and said target-viewer-category setting step, to calculate the number of viewers in said set-up target-viewer category.

21. The advertising-marketing method as defined in claim 20, which further includes the step of displaying said calculated number of viewers in said set-up target-viewer category.

22. The advertising-marketing method as defined in claim 21, which further includes the step of allowing said applicant to select one of said advertising forms desirous of being received by said viewers in said set-up target-viewer category.

23. The advertising-marketing method as defined in claim 22, wherein said advertising-form selecting step further includes the step of displaying in a graphical representation a level and/or type of incentive required for allowing the receiving of said selected advertising form to be accepted by said viewers in said set-up target-viewer category.

24. The advertising-marketing method as defined in claim 23, wherein said displaying step includes displaying a graph allowing said applicant to know information including the number of viewers to be expected to receive said advertisement and a total estimated cost, immediately after said applicant selectively sets up said incentive up to its upper limit value.

25. The advertising-marketing method as defined in claim 24, which further includes the step of transmitting said advertisement in said selected advertising form on an individual viewer basis.

26. The advertising-marketing method as defined in claim 25, wherein said advertisement transmitting step further includes the step of displaying said transmitted advertisement on an individual viewer basis.

27. The advertising-marketing method as defined in claim 26, which further includes the step of transmitting the incentive of said viewer obtained by receiving said advertisement, on an individual viewer basis.

28. The advertising-marketing method as defined in claim 27, wherein said incentive transmitting step further includes the step of displaying said transmitted incentive on an individual viewer basis.

# FIG.1

# FIG.2

START

ENTERING PROFILE INFORMATION OF A VIEWER FROM AN INPUT DEVICE 13 — S1

ENTERING PREFERENCE INFORMATION OF THE VIEWER FROM AN INPUT DEVICE 14 — S2

STORING THE VIEWER-ATTRIBUTE INFORMATION OF THE VIEWER IN A DATABASE 15 — S3

(1)

SETTING UP A PERMISSIBLE SCOPE FOR USING THE VIEWER-ATTRIBUTE INFORMATION AND TRACKING VIEWINGS THROUGH A SETUP DEVICE 11 — S4

DISPLAYING INFORMATION ABOUT THE PERMISSIBLE SCOPES TO ALLOW THE VIEWER TO CHECK THE INFORMATION — S5

IS IT NECESSARY TO CORRECT? — S6

YES

NO

TO FIG. 3

# FIG.3

FROM FIG. 2

OBTAINING A VIEWER'S PERMISSION OF USING THE VIEWER-ATTRIBUTE INFORMATION AND TRACKING THE VIEWING/ACTION RECORD — S7

① ← NO — ARE THE PERMISSIBLE SCOPES FIXED ? — S8

YES

A TRACKING DEVICE 16 TRACKS THE VIEWING/ACTION RECORD OF THE VIEWER IN CONFORMITY TO THE FIXED PERMISSIBLE SCOPES — S9

VIEWING-RECORD INFORMATION OF THE VIEWER OBTAINED THROUGH THE TRACKING IS STORED IN A DATABASE 17 — S10

AN AGGREGATING DEVICE 18 AGGREGATES THE VIEWING-RECORD INFORMATION AND THE VIEWER-ATTRIBUTE INFORMATION TOGETHER — S11

A PICKUP DEVICE 19 PICKS UP THE AGGREGATED INFORMATION ON AN INDIVIDUAL PERMISSION BASIS IN CONFORMITY TO INFORMATION ABOUT THE PERMISSIBLE SCOPES — S12

AN AGGREGATED-INFORMATION DISPLAY DEVICE 20 DISPLAYS THE AGGREGATED INFORMATION PICKED UP BY THE PICKUP DEVICE 19 ON AN INDIVIDUAL VIEWER BASIS — S13

END

# FIG.4

# FIG.5

START

A VIEWER ENTERS PROFILE INFORMATION FROM AN INPUT DEVICE 113 — S101

THE VIEWER ENTERS PREFERENCE INFORMATION FROM AN INPUT DEVICE 114 — S102

THE VIEWER-ATTRIBUTE INFORMATION OF THE VIEWER IS STORED IN A DATABASE 115 — S103

②

THE VIEWER USES A SETUP DEVICE 111 TO SET UP A PERMISSIBLE SCOPE FOR USING THE VIEWER-ATTRIBUTE INFORMATION AND TRACKING VIEWINGS — S104

INFORMATION ABOUT THE PERMISSIBLE SCOPES IS DISPLAYED TO ALLOW THE VIEWER TO CHECK THE INFORMATION — S105

S106

YES ← IS IT NECESSARY TO CORRECT?

NO

TO FIG. 6

# FIG.6

FROM FIG. 5

A VIEWER'S PERMISSION OF USING THE VIEWER-ATTRIBUTE INFORMATION AND TRACKING THE VIEWING/ACTION RECORD IS OBTAINED ⟶ S107

② NO

ARE THE PERMISSIBLE SCOPES FIXED? ⟶ S108

YES

A TRACKING DEVICE 116 TRACKS THE VIEWING/ACTION RECORD OF THE VIEWER IN CONFORMITY TO THE FIXED PERMISSIBLE SCOPES ⟶ S109

VIEWING-RECORD INFORMATION OF THE VIEWER OBTAINED THROUGH THE TRACKING IS STORED IN A DATABASE 117 ⟶ S110

AN AGGREGATING DEVICE 118 AGGREGATES THE VIEWER-ATTRIBUTE INFORMATION AND THE VIEWING-RECORD INFORMATION TOGETHER, ON AN INDIVIDUAL VIEWER-CATEGORY BASIS ⟶ S111

THE VIEWER USES AN INCENTIVE SETUP DEVICE 119 TO SET UP THE CATEGORY OF ADVERTISING PRODUCTS ⟶ S112

THE VIEWER USES THE INCENTIVE SETUP DEVICE 119 TO SET UP THE LEVEL OF INCENTIVE REQUIRED FOR PERMITTING TO RECEIVE EACH OF ADVERTISING FORMS FOR THE ADVERTISEMENT OF THE ADVERTISING PRODUCTS FALLING WITHIN THE SET-UP CATEGORY ⟶ S113

TO FIG. 7

# FIG.7

FROM FIG. 6

AN ADVERTISER USES AN ADVERTISING FORM SETUP DEVICE 121 TO SET UP A TARGET-VIEWER CATEGORY TO BE DERIVED FROM AT LEAST ONE OF THE PROFILE DATA, PREFERENCE DATA AND VIEWING/ACTION DATA OF THE VIEWER AND THEIR COMBINATIONS — S114

A CALCULATION DEVICE 120 AGGREGATES INFORMATION ABOUT THE INCENTIVE ON AN INDIVIDUAL VIEWER-CATEGORY BASIS IN ACCORDANCE WITH RESPECTIVE OUTPUTS FROM THE AGGREGATING DEVICE 118, THE INCENTIVE SETUP DEVICE 119 AND THE ADVERTISING FORM SETUP DEVICE 121 — S115

THE CALCULATION DEVICE 120 CALCULATES THE NUMBER OF VIEWERS IN THE SET-UP TARGET-VIEWER CATEGORY — S116

THE NUMBER OF VIEWERS CALCULATED AT STEP S116 IS DISPLAYED ON A SCREEN OF AN INTERACTION DEVICE 122 — S117

THE ADVERTISER USES A TARGET-VIEWER CATEGORY/ ADVERTISING FORM SELECTION DEVICE 123 TO SELECT ONE OF THE ADVERTISING FORMS DESIROUS OF BEING RECEIVED BY THE VIEWERS IN THE SET-UP TARGET-VIEWER CATEGORY — S118

THE LEVEL OF INCENTIVE REQUIRED FOR ALLOWING THE RECEIVING OF THE SELECTED ADVERTISING FORM TO BE ACCEPTED BY THE VIEWERS IN THE SET-UP TARGET-VIEWER CATEGORY IS DISPLAYED ON A SCREEN OF THE INTERACTION DEVICE 122 IN A GRAPHICAL REPRESENTATION — S119

THE ADVERTISEMENT IS SENT TO AN ADVERTISEMENT TRANSMISSION DEVICE 124 ON AN INDIVIDUAL VIEWER BASIS IN THE ADVERTISING FORM SELECTED USING THE TARGET-VIEWER CATEGORY/ADVERTISING FORM SELECTION DEVICE 123 — S120

THE INCENTIVE OF THE VIEWER OBTAINED BY RECEIVING THE ADVERTISEMENT IS DISPLAYED ON A SCREEN OF AN INCENTIVE DISPLAY DEVICE 125 — S121

END

# FIG.8

**SETUP OF ADVERTISING PRODUCT**

NAME OF ADVERTISING PRODUCT [ ]

CATEGORY OF ADVERTISING PRODUCT [ SELECT ▼ ]

↓

**SETUP OF TARGET-VIEWER CATEGORY**

☐ LIMITATION BASED ON PROFILE (ATTRIBUTE)

☐ LIMITATION BASED ON PREFERENCE (INTEREST, CONCERN)

☐ LIMITATION BASED ON VIEWING/ACTION RECORD

↓

CATEGORY SETUP NO. [ ]

NUMBER OF VIEWERS IN CATEGORY [ ]

ADVERTISING FORM?
☐ VIEWING OF CM
☐ TRANSMISSION OF PRODUCT INFORMATION
☐ QUESTIONNAIRE
☐ COUPON

**SETUP OF LIMITING FACTORS BASED ON PROFILE**

☐ SEXUALITY [ ▼ ]
☐ AGE [ ] ~ [ ]
☐ AREA [ ▼ ]
☐ FAMILY STRUCTURE [ ▼ ]
☐ OCCUPATION [ ▼ ]
☐ INCOME [ ▼ ]

THE AMOUNT OF INCENTIVE INCREASES $\alpha$ TIMES PER SETUP OF CONDITION

**SETUP OF LIMITING FACTORS BASED ON PREFERENCE**

FIELD OF TARGET'S INTEREST/CONCERN

CLASS [ ▼ ] ⇒ SUBCLASS [ ▼ ]

SPORT, EDUCATION, IT ... BASE BALL, SOCCER, HORSE RACE ...

THE AMOUNT OF INCENTIVE INCREASES $\beta$ TIMES PER SETUP OF CLASS, AND INCREASES $\beta \times \gamma$ TIMES IF SUBCLASS IS ADDITIONALLY SPECIFIED.

**SETUP OF LIMITING FACTORS BASED ON VIEWING/ACTION RECORD**

TARGET'S ACTION RECORD

VIEWED CONTENT [ ▼ ] ⇒ ACTION [ ▼ ]

CLICK, PURCHASE, ...

THE AMOUNT OF INCENTIVE INCREASES $\theta$ TIMES PER SETUP OF VIEW CONTENT, AND INCREASES $\theta \times \zeta$ TIMES IF THE CONTENT OF ACTION IS ADDITIONALLY SPECIFIED

EP 1 505 527 A1

# FIG.9

NUMBER OF VIEWERS

AMOUNT OF INCENTIVE (YEN)

0          ¥P

AMOUNT OF INCENTIVE ¥[ _ _ _ _ _ _ ]

NUMBER OF VIEWERS [ _ _ _ _ _ _ ]

TOTAL ESTIMATED COST ¥[ _ _ _ _ _ _ ]

☐ORDER OF ADVERTISING
☐RESET OF CATEGORY AND
  ADVERTISING FORM

EP 1 505 527 A1

## INTERNATIONAL SEARCH REPORT

| | International application No. |
|---|---|
| | PCT/JP03/05894 |

| A. CLASSIFICATION OF SUBJECT MATTER |
|---|
| Int.Cl$^7$ G06F17/60 |

According to International Patent Classification (IPC) or to both national classification and IPC

| B. FIELDS SEARCHED |
|---|

Minimum documentation searched (classification system followed by classification symbols)
Int.Cl$^7$ G06F17/60

Documentation searched other than minimum documentation to the extent that such documents are included in the fields searched

| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)
JICST FILE(JOIS), WPI, INSPEC(DIALOG)

| C. DOCUMENTS CONSIDERED TO BE RELEVANT |
|---|

| Category* | Citation of document, with indication, where appropriate, of the relevant passages | Relevant to claim No. |
|---|---|---|
| Y | Kenji KOYAMA, "Chokokyaku Marketing o Jitsugen suru eCRM", Computopia, Kabushiki Kaisha computer Eji-sha, 01 November, 2000 (01.11.00), Vol.35, No.410, pages 48 to 49 | 1–28 |
| Y | JP 09-091358 A (Fujitsu Ltd.), 04 April, 1997 (04.04.97), Full text; Figs. 1 to 22 & EP 0766431 A2  & CN 1150727 A & US 6047310 A  & KR 0268652 B & EP 1156632 A1 | 1–28 |
| Y | JP 2002-123548 A (Sony Corp.), 26 April, 2002 (26.04.02), Full text; Figs. 1 to 25 & WO 02/31694 A1 | 2–14,16–28 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 July, 2003 (03.07.03) | 22 July, 2003 (22.07.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

## INTERNATIONAL SEARCH REPORT

| International application No. |
|---|
| PCT/JP03/05894 |

C (Continuation).   DOCUMENTS CONSIDERED TO BE RELEVANT

| Category* | Citation of document, with indication, where appropriate, of the relevant passages | Relevant to claim No. |
|---|---|---|
| Y | Takuma FUKUI et al., "Business Bun'ya ni okeru AI System no Kochiku to Jitsuyo-ka", <Kokyaku Tekiyo Rei>, Hitachi Hyoron, Hitachi Hyoron-sha, 25 November, 1990 (25.11.90), Vol.72, No.11, pages 77 to 82 | 3-14,15-28 |
| Y | JP 2001-312629 A  (Hakuhodo Inc.), 09 November, 2001 (09.11.01), Full text; Figs. 1 to 8 (Family: none) | 3-14,15-28 |
| Y | JP 2001-283087 A  (Seven Net Kabushiki Kaisha), 12 October, 2001 (12.10.01), Full text; Figs. 1 to 13 (Family: none) | 2-14,16-28 |
| A | JP 2001-222601 A  (NEC Corp.), 17 August, 2001 (17.08.01), Full text; Figs. 1 to 7 & GB 2366038 A | 1-28 |

Form PCT/ISA/210 (continuation of second sheet) (July 1998)